# DEMANDE DE BREVET EUROPEEN

(11) **EP 0 790 156 A1**
(43) Date de publication de la demande: **20.08.1997**
(21) Numéro de dépôt: 97400308.9
(22) Date de dépôt: 11.02.1997
(51) Int. Cl.: B60R 21/20

(54) **Ensemble de module à sac gonflable notamment pour véhicule automobile**

(30) Priorité: 15.02.1996 FR 9601890
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR)
(74) Mandataire: Habasque, Etienne Joel Jean-François

(57) **Abrégé**

Cet ensemble de module à sac gonflable notamment pour véhicule automobile, du type comportant une coupelle (2) de réception d'au moins un sac gonflable et un couvercle (1) dont au moins l'un des bords est relié à un bord correspondant de la coupelle par des moyens d'articulation (3), est caractérisé en ce que les moyens d'articulation (3) comprennent au moins un organe allongé (4) enroulé en hélice entre des moyens d'accrochage (5,6) du couvercle et de la coupelle, respectivement.

## Description

La présente invention concerne un ensemble de module à sac gonflable, notamment pour véhicule automobile, du type comportant une coupelle de réception d'au moins un sac gonflable et un couvercle.

On connaît déjà dans l'état de la technique, un certain nombre d'ensembles de ce type, dans lesquels au moins l'un des bords du couvercle est relié à un bord correspondant de la coupelle par des moyens d'articulation reliés d'une part, au couvercle et d'autre part, à la coupelle.

On connaît en effet dans l'état de la technique, différentes formes de réalisation de ces moyens d'articulation.

C'est ainsi par exemple que des organes en forme de charnières peuvent être utilisés, ces charnières étant fixées d'une manière ou d'une autre, sur le couvercle et la coupelle.

La fixation de ces charnières sur ces pièces peut en effet être assurée par exemple par rivetage ou autre.

D'autres moyens d'articulation ont également été développés dans l'état de la technique, ces moyens d'articulation comprenant par exemple des zones de section réduite de ces pièces, c'est-à-dire de la coupelle et du couvercle, ces moyens étant alors venus de matière avec le reste de ces pièces lors de leur fabrication.

Des moyens en forme de crochet ont également été développés dans l'état de la technique pour assurer l'articulation du couvercle sur la coupelle.

On conçoit cependant que tous ces ensembles présentent un certain nombre d'inconvénients, soit au niveau de leur fiabilité, soit au niveau de leur complexité de réalisation, les efforts exercés sur les moyens d'articulation étant relativement importants lors du déclenchement du fonctionnement du module à sac gonflable.

Le but de l'invention est donc de résoudre ces problèmes.

A cet effet, l'invention a pour objet un ensemble de module à sac gonflable, notamment pour véhicule automobile, du type comportant une coupelle de réception d'au moins un sac gonflable et un couvercle dont au moins l'un des bords est relié à un bord correspondant de la coupelle par des moyens d'articulation, caractérisé en ce que les moyens d'articulation comprennent au moins un organe allongé enroulé en hélice entre des moyens d'accrochage du couvercle et de la coupelle, respectivement.

Selon un mode de réalisation, l'organe allongé se présente sous la forme d'un fil métallique à ressort.

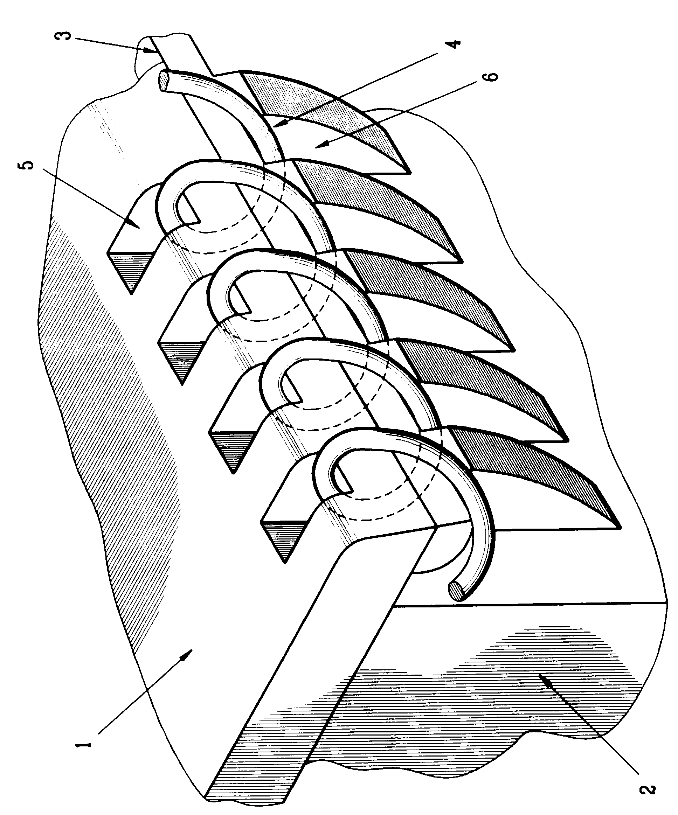

L'invention sera mieux comprise à la lecture de la description qui va suivre, donnée uniquement à titre d'exemple et faite en se référant au dessin annexé, qui représente une vue partielle schématique illustrant un exemple de réalisation d'un ensemble de module à sac gonflable selon l'invention.

On reconnaît en effet sur cette figure, un couvercle de module à sac gonflable, désigné par la référence générale 1 sur cette figure, ce couvercle étant adapté pour être fixé de manière articulée sur une coupelle 2 de réception d'au moins un sac de ce module à sac gonflable.

De tels modules à sac gonflable peuvent être intégrés par exemple dans un coussin central de volant de direction d'un véhicule automobile, dans une planche de bord d'un véhicule, en regard par exemple du passager avant de celui-ci ou dans d'autres emplacements d'un véhicule, de façon classique.

Au moins l'un des bords du couvercle 1 est relié à un bord correspondant de la coupelle 2 par l'intermédiaire de moyens d'articulation désignés par la référence générale 3 sur cette figure, reliés d'une part, au couvercle et d'autre part, à la coupelle.

Dans l'exemple de réalisation représenté sur cette figure, ces moyens d'articulation comprennent au moins un organe allongé enroulé en hélice entre des moyens d'accrochage du couvercle et de la coupelle, respectivement.

C'est ainsi que dans l'exemple de réalisation représenté, cet organe allongé se présente sous la forme d'un fil métallique à ressort désigné par la référence générale 4, passant successivement dans des moyens d'accrochage du couvercle et de la coupelle, formés par exemple par des séries de trous correspondants 5 et 6 de ces pièces, pour assurer la fixation articulée du couvercle sur la coupelle.

Ces moyens d'accrochage, formés par exemple par les trous 5,6 ménagés dans les bords correspondants du couvercle et de la coupelle, peuvent être obtenus lors de la fabrication de ces pièces par exemple par moulage ou autre. Ces trous peuvent par exemple être ménagés dans des nervures de renfort de ces pièces et de guidage des déplacements du couvercle, prévus sur les bords correspondants de ces pièces.

On conçoit alors que la mise en place de cet organe allongé enroulé en hélice est extrêmement simple, car une fois que le couvercle est placé en position correcte sur la coupelle, il suffit d'enrouler cet organe pour qu'il passe dans les moyens d'accrochage successifs correspondants du couvercle et de la coupelle.

Ainsi que cela a été indiqué précédemment, cet organe allongé peut se présenter sous la forme d'un fil métallique à ressort.

Bien entendu, d'autres modes de réalisation des moyens d'accrochage et de cet organe peuvent être envisagés et celui-ci peut également se présenter sous la forme d'une bande métallique par exemple.

Bien entendu également, cet organe allongé peut être réalisé en un matériau autre qu'un matériau métallique à ressort.

On notera également que plusieurs organes allongés imbriqués les uns dans les autres, par exemple sous la forme d'une nappe d'organes, peuvent également être interposés entre le couvercle et la coupelle.

On conçoit alors que l'ensemble selon l'invention présente un certain nombre d'avantages par rapport aux dispositifs de l'état de la technique, notamment au niveau de sa structure extrêmement fiable et simple, de sa simplicité de montage et de l'aptitude des moyens d'articulation à remplir en toute sécurité, la fonction d'articulation du couvercle sur la coupelle en supportant des contraintes mécaniques relativement élevées.

## Revendications

1. Ensemble de module à sac gonflable notamment pour véhicule automobile, du type comportant une coupelle (2) de réception d'au moins un sac gonflable et un couvercle (1) dont au moins l'un des bords est relié à un bord correspondant de la coupelle par des moyens d'articulation (3), caractérisé en ce que les moyens d'articulation (3) comprennent au moins un organe allongé (4) enroulé en hélice entre des moyens d'accrochage (5,6) du couvercle et de la coupelle, respectivement.

2. Ensemble selon la revendication 1, caractérisé en ce que l'organe allongé (3) se présente sous la forme d'un fil métallique à ressort.

3. Ensemble selon la revendication 1 ou 2, caractérisé en ce que les moyens d'accrochage comprennent des trous (5,6) ménagés respectivement dans le couvercle (1) et la coupelle (2) pour le passage de l'organe allongé.

4. Ensemble selon l'une quelconque des revendications précédentes, caractérisé en ce que les moyens d'articulation (3) comprennent plusieurs organes allongés imbriqués sous la forme d'une nappe interposée entre le couvercle et la coupelle.
